Europäisches Patentamt

European Patent Office

Office européen des brevets

(11) Veröffentlichungsnummer: **0 374 380**
**A2**

## (12) EUROPÄISCHE PATENTANMELDUNG

(21) Anmeldenummer: 89117440.1

(22) Anmeldetag: 21.09.89

(51) Int. Cl.5: **B60S 3/06**

(30) Priorität: 23.12.88 DE 8816003 U

(43) Veröffentlichungstag der Anmeldung:
27.06.90 Patentblatt 90/26

(84) Benannte Vertragsstaaten:
DE ES FR GB IT

(71) Anmelder: Kleindienst GmbH
Argonstrasse 8
D-8900 Augsburg(DE)

(72) Erfinder: Bentenrieder, Maximilian
Grottenweg 8
D-8911 Scheuring(DE)

(74) Vertreter: Ernicke, Hans-Dieter, Dipl.-Ing. et al
Patentanwälte Dipl.-Ing. H.-D. Ernicke
Dipl.-Ing. Klaus Ernicke Schwibbogenplatz
2b
D-8900 Augsburg(DE)

(54) Schutzvorrichtung für ausfahrbare Behandlungsaggregate.

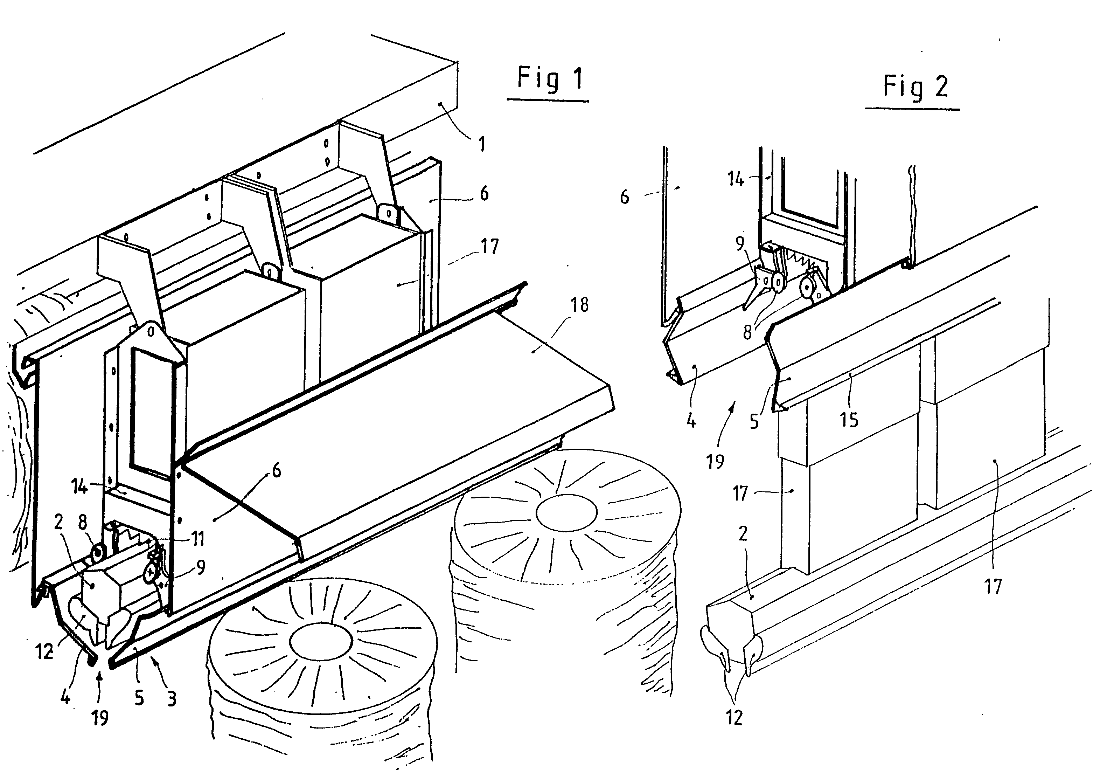

(57) Die Erfindung betrifft eine Schutzvorrichtung für
ausfahrbare Behandlungsaggregate, insbesondere
Trockendüsen (2) an Portalen (1) einer Autowaschanlage. Das Behandlungsaggregat (2) ist von einem
Schutzgehäuse (6) umgeben, dessen Auslaßöffnung
(19) von zwei im Inneren des Schutzgehäuses (6)
schwenkbar gelagerten Klappen (4,5) verschlossen
ist. Die Klappen (4,5) weisen innenseitig mindestens
eine Anlaufrolle (8) auf, die in den Bewegungsbereich des Behandlungsaggregates (2) reicht, so daß
dieses bei einer Ausfahrbewegung die Klappen (4,5)
gegen die Kraft einer Rückstellfeder (11) öffnet. Ausgewählte Figur ist Fig. 1.

Fig 1

EP 0 374 380 A2

## Schutzvorrichtung für ausfahrbare Behandlungsaggregate.

Die Erfindung betrifft eine Schutzvorrichtung für ausfahrbare Behandlungsaggregate, insbesondere Trockendüsen, an Portalen von Autowaschanlagen.

In Autowaschanlagen können Spritzwasser, korrosive Chemikalien und sonstige Umgebungsbedingungen die Funktionsfähigkeit mancher Behandlungsaggregate beeinträchtigen.

Es ist daher Aufgabe der vorliegenden Erfindung, eine Möglichkeit zum Schutz dieser Behandlungsaggregate aufzuzeigen.

Die Erfindung löst diese Aufgabe mit den Merkmalen im Kennzeichenteil des Hauptanspruchs.
Wenn das ausfahrbare Behandlungsaggregat außer Betrieb ist, ist es in einem Schutzgehäuse hinter einer beweglichen Klappe verborgen und gegen Spritzwasser, Schaum- oder Chemikalienspritzer, mechanische Beschädigung oder dgl. geschützt. Die erfindungsgemäße Schutzvorrichtung läßt sich für verschiedene Arten von Behandlungsaggregaten und in Verbindung mit stationären oder fahrbaren Portalen von Autowaschanlagen einsetzen. Besondere Vorteile werden beim Schutz von ausfahrbaren Trockendüsen, speziell deren Düsenbalken, erzielt. Neben dem Eigenschutz der Trockendüse vor Verschmutzung wird außerdem sichergestellt, daß an der Trockendüse keine Flüssigkeitsreste hängen, die beim Trockenvorgang auf das Fahrzeug abgeblasen werden und dieses verschmutzen.

In der bevorzugten Ausführungsform ist das Schutzgehäuse mit zwei schwenkbaren Klappen versehen, die durch die Ein-und Ausfahrbewegung des Behandlungsaggregates, hier speziell einer Trockendüse, selbsttätig geöffnet und geschlossen werden. Hierfür sind Anlaufrollen vorgesehen, die auf der Kontur des Düsenbalkens nach Art einer Kulissenführung abrollen und ihre zugeordnete Klappe unter dem Krafteinfluß einer Feder öffnen und schließen. Auf diese Weise kommt der Düsenbalken selbst mit den Klappen nicht in Berührung. Dies ist für die am Düsenbalken angeordneten und auf Druck schaltenden Kollisionssensoren von Bedeutung.

In den Unteransprüchen sind weitere vorteilhafte Ausgestaltungen der Schutzvorrichtung angegeben. Über die Schlitzführung läßt sich die Anlaufrolle anpassen und damit die düsenkonturabhängige Bewegungsstellung der Klappen auf Wunsch einstellen. Für eine definierte Öffnungs- und Schließstellung empfiehlt es sich, die Rückstellfeder jeweils von der Klappe zum Schutzgehäuse bzw. dessen Rahmen zu führen. Desgleichen ist es auch möglich, die Rückstellfeder beidseits an den Klappen angreifen zu lassen. Mit der Fangrinne am Klappenrand wird abspritzendes oder vom Schutzgehäuse ablaufendes Wasser von der Düse und der Fahrzeugoberfläche ferngehalten und aufgefangen. Die Fangrinne ist hierzu endseitig geschlossen. Am Ende des Trocknungsvorganges wird beim Einfahren der Trockendüse und der Schließbewegung der Klappen die Fangrinne wieder entleert. In diesem Moment befindet sich die Trockendüse üblicherweise nicht mehr im Bereich des getrockneten Fahrzeugs. Über entsprechend angeordnete Dichtungen kann der Innenraum des Schutzgehäuses in geöffneter und geschlossener Klappenstellung gegen Eindringen von Spritzwasser zusätzlich abgesichert werden.

Die Erfindung ist in den Zeichnungen beispielsweise und schematisch dargestellt. Im einzelnen zeigen:

Fig. 1 und 2: eine perspektivische Ansicht eines Waschportals mit einer Trockendüse und einer Schutzvorrichtung in Ruhe- und Betriebsstellung,

Fig. 3: eine geschnittene Draufsicht auf die Schutzvorrichtung von Fig. 1 und 2 und

Fig. 4: eine vergrößerte und geschnittene Detailansicht der Klappenkonstruktion gemäß Schnittlinie IV-IV von Fig. 3 in Öffnungs- und Schließstellung.

In Fig. 1 ist in teilweise abgebrochener Ansicht das Portal (1) einer Autowaschanlage, hier in Form eines fahrbaren Portals einer stationären Anlage, dargestellt. In Abwandlung kann es aber auch ein feststehendes oder über Teilstrecken mitbewegtes Portal einer Waschstraße sein. Von den unterschiedlichen Behandlungsaggregaten des Waschportals (1) ist neben den Waschbürsten die horizontale Trockendüse (2) dargestellt. Diese besteht aus einem Düsenbalken, der sich quer über das Portal (1) erstreckt und einen oder mehrere teleskopierbare Luftschächte (17) aufweist, die wiederum mit einem Gebläse (nicht dargestellt) in Verbindung stehen. Über geeignete und nicht dargestellte Antriebsmittel wird der Düsenbalken (2) auf- und abbewegt.

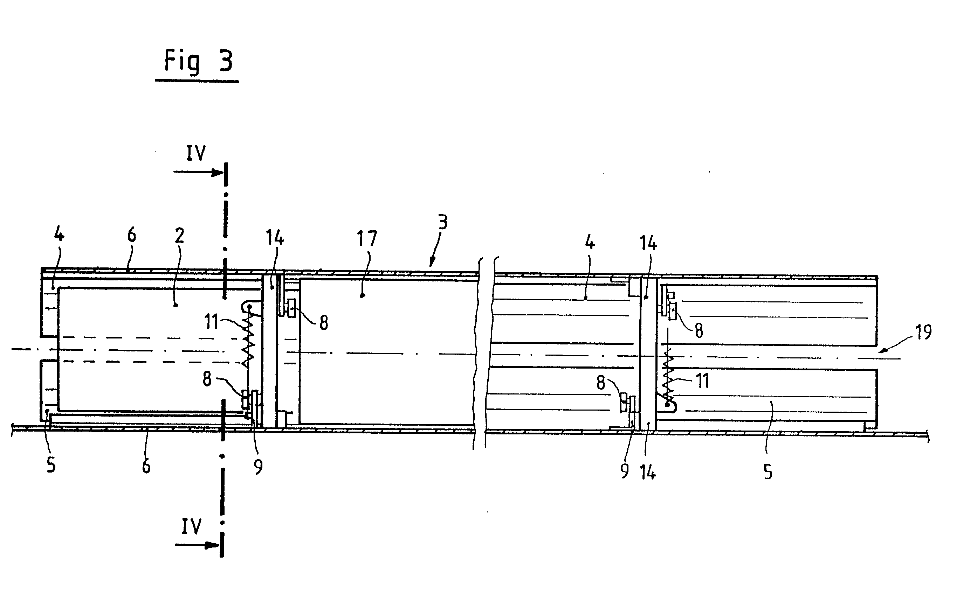

Die Trockendüse (2) ist von einer Schutzvorrichtung (3) umgeben, die aus einem Schutzgehäuse (6) mit seinem Rahmen (14) bzw. dessen Traversen und einer Klappenkonstruktion (4,5) besteht. Zwischen den Traversen (14) erstrecken sich die Teleskopschächte (17). Fig. 3 verdeutlicht diese Anordnung in der Draufsicht, wobei im rechten Bildteil der Luftschacht (17) und die Trockendüse (2) weggelassen sind. Am Schutzgehäuse (6) sind auch vorragende Spritzschutzplatten (18) befestigt.

In Ruhestellung ist die Trockendüse (2) im Schutzgehäuse (6) zurückgezogen, dessen Auslaßöffnung (19) dann durch zwei Klappen (4,5) verschlossen ist. In der Ruhestellung können die an- deren Behandlungsaggregate, wie Sprühvorrichtun- gen, Bürsten etc. in Funktion sein, ohne daß die Trockendüse (2) hiervon beeinträchtigt ist. Fig. 1 zeigt die Ruhestellung und Fig. 2 die Betriebsstellung, in der die Trockendüse (2) ausgefahren und die Klappen (4,5) geöffnet sind.

Der Schutzkasten (6) ist hängend am Querbalken des Waschportals (1) mit der Auslaßöffnung (19) nach unten befestigt. Die beiden Schwenkklappen (4,5) sind im Innern und am unteren Rand des Schutzgehäuses (6) über Schwenklager (7) drehbar gelagert. Sie erstrecken sich im wesentlichen über die gesamte Gehäuse- und Düsenlänge.

Die Schwenkklappen (4,5) besitzen jeweils zwei Anlaufrollen (8), die an den beiden Endbereichen der Klappen paarweise einander gegenüberliegend angeordnet sind. Dort weisen die Schwenkklappen (4,5) am oberen Rand Stege (9) auf, die außer den Anlaufrollen (8) auch die Schwenklager (7) aufnehmen. An diesen Stellen ragen vom Gehäuserahmen (14) bzw. den Traversen kurze Lagerarme nach unten. Die Anlaufrollen (8) sind mit ihren Achsen in einer Schlitzführung (20) an den Stegen (9) gelagert und festgespannt. Sie sind hierbei oberhalb der Schwenklager (7) angeordnet. Innerhalb der Schlitzführung (20) läßt sich die Achsstellung verändern.

An jeweils einem der Stege (9) der beiden Schwenkklappen (4,5) ist ein aufragender Ansatz (10) angeordnet, an dem eine Rückstellfeder (11) angreift. Am anderen Ende ist die Rückstellfeder (11) mit einem Vorsprung an der Traverse (14) verbunden. Die Rückstellfedern (14) ziehen die Ansätze 10) nach innen und schwenken dabei die Klappe (4,5) unter Freigabe der Auslaßöffnung (19) nach außen.

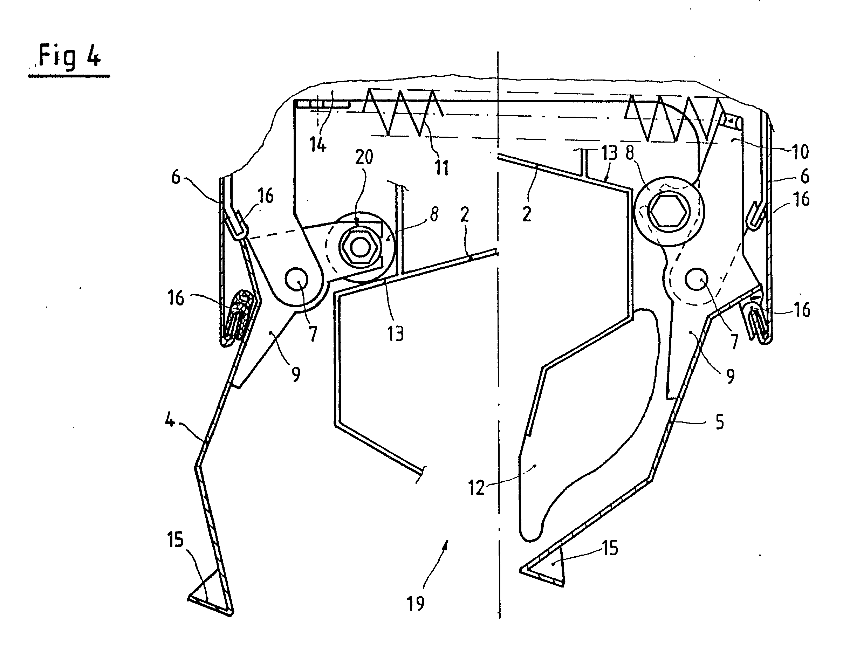

Über die Anlaufrollen (8) wird diese Schwenkbewegung reguliert. Wie Fig. 4 näher verdeutlicht, läuft die Anlaufrolle (8) bei eingefahrenem Düsenbalken (2) gegen dessen Seitenwand. In dieser Stellung ist die Schwenkklappe (5) geschlossen. Sobald der Düsenbalken (2) abgesenkt wird, überfährt die Anlaufrolle (8) dessen als Kulisse ausgebildete Schulter (13), wodurch die Schwenkbewegung der Schutzklappe (4,5) freigegeben wird und die Klappe sich öffnet. Fig. 4 zeigt rechts die Klappe (5) in Schließstellung und links die Klappe (4) in Öffnungsstellung.

Am unteren Rand des Düsenbalkens (2) sind im Bereich der Düsenöffnung links und rechts Luftbälge (12) mit Drucksensoren angeordnet. Diese dienen als Kollisionsschutz der ausgefahrenen Düse bei Kontakt mit dem Fahrzeug und geben bei Überschreiten eines Druckgrenzwertes ein Schaltsignal zum Einfahren der Trockendüse (2).

Die Schwenkklappen (4,5) bestehen aus Blechen, die entsprechend der Düsen- bzw. Balgkontur abgekantet sind und die Trockendüse (2) in Schließstellung mit Abstand umgeben. Die Anordnung und Einstellung der Kulissenschulter (13) und der Anlaufrollen (8) ist so betroffen, daß beim Öffnen und Schließen der Klappen (4,5) diese nicht in Kontakt mit den Bälgen (12) kommen und kein Kollisionssignal hervorrufen.

Die beiden Schwenkklappen (4,5) weisen am unteren Rand jeweils eine nach außen gerichtete spitzwinkelige Abkantung auf, die eine Fangrinne (15) bildet. Die Fangrinne (15) ist stirnseitig an den Enden geschlossen. Wie Fig. 4 verdeutlicht, fängt sie in Öffnungsstellung von der Gehäusewand und der Klappe (4) ablaufende Flüssigkeiten auf. In Schließstellung ist die untere Rinnenwand abwärts geneigt, so daß die aufgefangene Flüssigkeit wieder abfließen kann.

Das Schutzgehäuse (6) zeigt gemäß Fig. 4 an seinen beiden unteren Längsrändern ebenfalls Abkantungen, die nach innen gerichtet sind und jeweils eine Dichtung (16) tragen. Die Dichtung (16) umgreift die Abkantung und besitzt an der Oberseite einen elastischen Wulst. Wie Fig. 4 verdeutlicht, legt sich in Schließstellung die Klappe (5) mit ihrem oberen Rand auf den Dichtwulst und verhindert ein Eindringen von Spritzwasser ins Gehäuseinnere. In Öffnungsstellung drückt die Klappe (4) gegen den unteren Seitenrand der Dichtung (16). Weiter oben, etwa in Höhe der Anlaufrollen (8), sind beidseits weitere längslaufende Abkantungen mit Dichtungen (16) angeordnet. Gegen diese Dichtungen legt sich in Öffnungsstellung der obere Rand der Schwenkklappen (4,5).

Wie Fig. 1, 3 und 4 verdeutlichen, wird die Klappenstellung in Schließlage so gewählt, daß zwischen den unteren Enden ein kleiner Spalt von vorzugsweise ca. 18 mm freibleibt. Durch diesen kann etwaiges Kondenswasser abfließen. Der Spalt ist auch für die Trocknung von Fahrzeugen mit höheren Aufbauten, wie Transportern, nützlich. In diesen Fällen bleibt der Düsenbalken in seiner oberen Endstellung stehen und kann ohne Abwärtsbewegung und Klappenbetätigung durch den Spalt ausblasen.

## Ansprüche

1.) Schutzvorrichtung für ausfahrbare Behandlungsaggregate, insbesondere Trockendüsen, an Portalen von Autowaschanlagen, dadurch gekennzeichnet, daß das Behandlungsaggregat (2) von einem Schutzgehäuse (6) umgeben ist, dessen Auslaßöffnung (19) von mindestens einer beweglichen Klappe (4,5) verschlossen ist.

2.) Schutzvorrichtung nach Anspruch 1, dadurch **gekennzeichnet**, daß zwei Klappen (4,5) vorgesehen sind, die im Innern des Schutzgehäuses (6) schwenkbar gelagert (7) sind.

3.) Schutzvorrichtung nach Anspruch 1 oder 2, dadurch **gekennzeichnet**, daß die Klappen (4,5) innenseitig mindestens eine Anlaufrolle (8) aufweisen, die in den Bewegungsbereich des Behandlungsaggregates (2) reicht.

4.) Schutzvorrichtung nach Anspruch 3, dadurch **gekennzeichnet**, daß die Anlaufrollen (8) der beiden Klappen (4,5) paarweise einander gegenüberliegend angeordnet sind.

5.) Schutzvorrichtung nach Anspruch 1 oder einem der folgenden, dadurch **gekennzeichnet**, daß die Klappen (4,5) eine Rückstellfeder (11) aufweisen.

6.) Schutzvorrichtung nach Anspruch 3, 4 oder 5, dadurch **gekennzeichnet**, daß die Klappen (4,5) einen Steg (9) aufweisen, an dem die Anlaufrolle (8) in einer Schlitzführung (20) gelagert ist und an dem das Schwenklager (7) angeordnet ist.

7.) Schutzvorrichtung nach Anspruch 6, dadurch **gekennzeichnet**, daß der Steg (9) einen Ansatz (10) aufweist, an dem die Rückstellfeder (11) befestigt ist.

8.) Schutzvorrichtung nach Anspruch 7, dadurch **gekennzeichnet**, daß die Rückstellfeder (11) am anderen Ende mit dem Schutzgehäuse (6) verbunden ist.

9.) Schutzvorrichtung nach Anspruch 1 oder einem der folgenden, dadurch **gekennzeichnet**, daß das Schutzgehäuse (6) hängend mit der Auslaßöffnung (19) nach unten angeordnet ist, und daß die Klappen (4,5) am äußeren Rand eine Fangrinne (15) aufweisen.

10.) Schutzvorrichtung nach Anspruch 1 oder einem der folgenden, dadurch **gekennzeichnet**, daß die Klappen (4,5) als abgekantete Bleche ausgebildet und der Kontur des Behandlungsaggregates nachgebildet sind.

11.) Schutzvorrichtung nach Anspruch 1 oder einem der folgenden, dadurch **gekennzeichnet**, daß am unteren Gehäuserand Dichtungen (16) angeordnet sind.

STÜCKLISTE

1 Portal, Waschportal
2 Behandlungsaggregat, Trockendüse, Düsenbalken
3 Schutzvorrichtung
4 Klappe, Schwenkklappe
5 Klappe, Schwenkklappe
6 Schutzgehäuse
7 Lager
8 Anlaufrolle
9 Steg

10 Ansatz
11 Rückstellfeder
12 Balg
13 Schulter
14 Traverse, Rahmen
15 Fangrinne
16 Dichtung
17 Luftschacht, Teleskopschacht
18 Spritzschutzplatte
19 Auslaßöffnung
20 Schlitzführung

Fig 1

Fig 2

Fig 3

**Fig 4**